(19) Europäisches Patentamt / European Patent Office / Office européen des brevets

(11) **EP 4 321 726 B1**

(12) **EUROPÄISCHE PATENTSCHRIFT**

(45) Veröffentlichungstag und Bekanntmachung des Hinweises auf die Patenterteilung:
**02.07.2025  Patentblatt 2025/27**

(21) Anmeldenummer: **23187978.4**

(22) Anmeldetag: **27.07.2023**

(51) Internationale Patentklassifikation (IPC):
**E21B 44/00** *(2006.01)*     **G07C 3/00** *(2006.01)*

(52) Gemeinsame Patentklassifikation (CPC):
**E21B 44/00; G07C 3/00;** E21B 2200/22

(54) **SYSTEM, VERFAHREN UND COMPUTERPROGRAMMPRODUKT ZUR AUTOMATISCHEN ERKENNUNG VON ARBEITSZYKLEN EINER TIEFBAUMASCHINE**

SYSTEM, METHOD AND COMPUTER PROGRAM PRODUCT FOR AUTOMATICALLY DETECTING WORKING CYCLES OF A CIVIL ENGINEERING MACHINE

SYSTÈME, PROCÉDÉ ET PRODUIT PROGRAMME INFORMATIQUE POUR DÉTECTER AUTOMATIQUEMENT DES CYCLES DE TRAVAIL D'UN ENGIN DE TRAVAUX PUBLICS

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:  **10.08.2022  DE 102022120182**

(43) Veröffentlichungstag der Anmeldung:
**14.02.2024  Patentblatt 2024/07**

(73) Patentinhaber: **Liebherr-Werk Nenzing GmbH 6710 Nenzing (AT)**

(72) Erfinder:
• **MARENT, Michael 6824 Schlins (AT)**

• **STANGE, Aleksej 6706 Bürs (AT)**

(74) Vertreter: **Laufhütte, Dieter Lorenz Seidler Gossel Rechtsanwälte Patentanwälte Partnerschaft mbB Widenmayerstraße 23 80538 München (DE)**

(56) Entgegenhaltungen:
**EP-A1- 3 978 724     WO-A1-2021/119324 RU-C9- 2 723 805**

**Beschreibung**

Die vorliegende Erfindung betrifft ein System zur automatischen Erkennung von Arbeitszyklen einer Tiefbaumaschine, eine Tiefbaumaschine, ein Verfahren zur automatischen Erkennung von Arbeitszyklen einer Tiefbaumaschine mittels eines solchen Systems sowie ein entsprechendes Computerprogrammprodukt.

Typische Arbeitsabläufe von Tiefbaumaschinen wie Drehbohranlagen, Schlitzwandfräsen oder Vibrationsrammen sind für gewöhnlich in Arbeitszyklen unterteilt, wobei jeder Zyklus aus mehreren Arbeitsschritten bestehen kann. Dabei ist im Tiefbau ein Zyklus üblicherweise dadurch definiert, dass an dessen Ende eine gewünschte Endtiefe erreicht ist. Beispiele können hier das Einrütteln von Pfählen in eine bestimmte Einbringtiefe mit einer Vibrationsramme oder das Erreichen einer bestimmten Bohrtiefe bei einer Schlitzwandfräse oder einer Kellybohranlage sein.

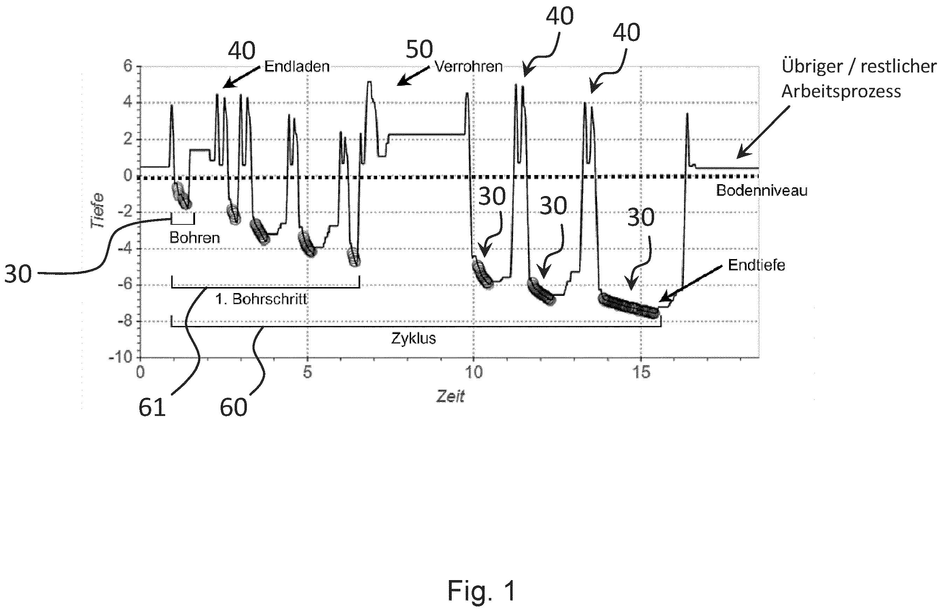

Die Figur 1 zeigt beispielhaft einen möglichen Arbeitszyklus beim Kellybohren, wobei die schwarze Linie die über Sensoren erfasste momentane Tiefe des Bohrwerkzeugs in Abhängigkeit der Zeit darstellt. Die gestrichelte Linie repräsentiert das Bodenniveau, während die Kreise 30 beim aktiven Bohren aufgenommene Messpunkte darstellen.

Beim Kellybohren setzt sich ein Zyklus 60 (im Folgenden auch als Arbeitszyklus 60 bezeichnet) aus mehreren Bohrschritten 61 zusammen, zwischen denen verrohrt wird (Phase 50 "Verrohren"). Jeder Bohrschritt 61 umfasst wiederum mehrere Bohrphasen 30, in denen nach und nach immer tiefer gebohrt wird und zwischen denen das abgebohrte Material entladen wird (Phase 40 "Entladen"). Der Arbeitszyklus 60 endet mit Erreichen einer festgelegten Endtiefe.

In vielen Tiefbauanwendungen legt aktuell der Maschinenführer manuell fest, wann ein Zyklus beginnt und endet. Das hat mehrere Nachteile. Einerseits stellt die manuelle Kennzeichnung des Zyklus einen Mehraufwand für den Maschinenführer dar. Zudem kann es vorkommen, dass der Maschinenführer die Eingabe des Start- oder Stoppsignals vergisst. Andererseits wird der Beginn bzw. das Ende des Zyklus durch den Maschinenführer willkürlich festgelegt. Beispielsweise kann der Zyklusstart noch vor dem eigentlichen Arbeitsbeginn eingegeben werden oder die Stopp-Eingabe erfolgt, wenn der Maschinenführer seine Endtiefe bereits verlassen hat.

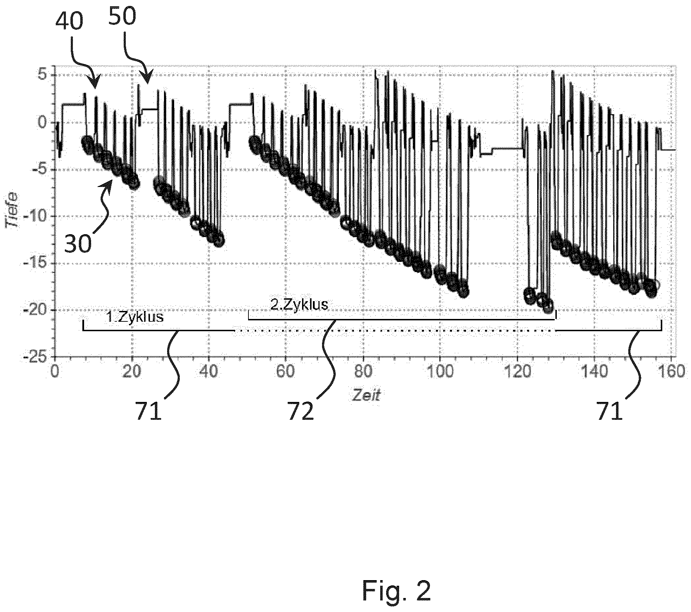

Besonders intransparent wird es bei zeitlich überlappenden Zyklen. Die Figur 2 zeigt beispielhaft die Erstellung eines Mehrfachpfahls beim Kellybohren, wobei die Kreise 30 wiederum das aktive Bohren bzw. die jeweiligen Bohrphasen 30 kennzeichnen. Hierbei beginnt der Maschinenführer einen ersten Arbeitszyklus 71. Ohne diesen abzuschließen bzw. die definierte Endtiefe zu erreichen, wechselt er in einen zweiten Arbeitszyklus 72, wobei die Bohrtiefe sprungartig zurückgeht. Diesen zweiten Zyklus 72 schließt der Maschinenführer ab, und zwar bei einer größeren Bohrtiefe als die im ersten Zyklus 71 zuletzt erreichte Tiefe, und setzt anschließend wieder den ersten Zyklus 71 fort, wobei sich die Bohrtiefe wiederum sprunghaft ändert. Eine korrekte manuelle Kennzeichnung der verschiedenen ineinandergreifenden Zyklen 71, 72 ist hier besonders kompliziert und fehleranfällig.

Dadurch, dass derzeit üblicherweise nur die Start- und Endzeitpunkt der gesamten Zyklen festgehalten werden, ist ferner unbekannt, über welchen Zeitbereich sich die einzelnen Phasen innerhalb eines Zyklus erstrecken - z.B. die einzelnen Bohrphasen 30 in den Figuren 1 und 2.

In vielen Fällen gibt es jedoch überhaupt keine Informationen zu den einzelnen Arbeitszyklen, d.h. bislang auch keine Möglichkeit, diese durch den Maschinenführer manuell festzulegen.

Aus der EP 3978724A1 ist ein Verfahren zum Durchführen einer Tiefbaumaßnahme mit einer Tiefbaumaschine bekannt, welche eine Vielzahl von Betätigungselementen und Zensuren zum Erfassen von Betriebszuständen zu den Betätigungselementen aufweist, wobei diese auch eine Rechnereinheit beinhaltet durch welche erfasste Parameterwerte der Zensierung beim Durchführen der Tiefbaumaßnahme empfangen werden.

Vor diesem Hintergrund liegt der vorliegenden Erfindung die Aufgabe zugrunde, die Erkennung von Arbeitszyklen und insbesondere auch von Arbeitsphasen innerhalb der Arbeitszyklen bei Tiefbaumaschinen zu erleichtern. Insbesondere soll eine einfache und zuverlässige Erkennung des Beginns und des Endes einzelner Zyklen und auch einzelner Arbeitsphasen innerhalb der Zyklen ermöglicht werden.

Erfindungsgemäß wird diese Aufgabe durch ein System mit den Merkmalen des Anspruchs 1, durch ein Verfahren mit den Merkmalen des Anspruchs 12 und durch ein Computerprogrammprodukt mit den Merkmalen des Anspruchs 15 gelöst. Vorteilhafte Ausführungsformen der Erfindung ergeben sich aus den Unteransprüchen und der nachfolgenden Beschreibung.

Demnach wird System zur automatischen Erkennung von Arbeitszyklen einer Tiefbaumaschine vorgeschlagen, welches einen Datenspeicher, eine Erfassungseinrichtung, ein Zyklusphasenerkennungsmittel und ein Zyklenzuordnungsmittel umfasst. Bei der Tiefbaumaschine kann es sich beispielsweise um eine Kellybohranlage, eine Bohranlage zum Endlosschneckenbohren, Doppelkopfbohren oder Vollverdrängerbohren, um eine Schlitzwandfräse (bzw. ein Trägergerät mit einer solchen) oder um eine Vibrationsramme handeln, wobei diese Aufzählung nicht abschließend zu verstehen ist, da viele weitere Bohr- und Tiefgründungsverfahren existieren, bei denen die erfindungsgemäße Methode ebenfalls zum Einsatz kommen kann.

Auf dem Datenspeicher ist ein Klassifikationsmodell hinterlegt, welches durch ein mathematisches Optimierungsverfahren maschinell generiert wurde. Bei dem Klassifikationsmodell handelt es sich also nicht um einen von vorneherein festgelegten regelbasierten Algorithmus mit einer festgelegten Zuordnungsregel (beispielsweise der Form "falls Messwert X > Grenzwert Y, dann ordne den Messwert X der Kategorie Z zu"). Vielmehr ist das Klassifikationsmodell Ausfluss eines maschinellen Optimierungsprozesses, dessen Ergebnis insbesondere nicht im Vorhinein konkret absehbar ist und sich erst aus dem Optimierungsprozess ergibt.

Mittels der Erfassungseinrichtung sind Zustandsdaten betreffend mindestens einen Zustand der Tiefbaumaschine erfassbar, beispielsweise eine Position, eine Ausrichtung, ein Druck in einem Aktuator, eine Motordrehzahl etc. Die Zustandsdaten können ggf. vor der Weiterverarbeitung vorbereitet bzw. bearbeitet werden. Ferner ist denkbar, dass die Daten direkt weitergeleitet werden (Streaming) oder zunächst auf der Tiefbaumaschine oder extern zwischengespeichert werden.

Das Zyklusphasenerkennungsmittel hat Zugriff auf den Datenspeicher und ist insbesondere in der Lage, das Klassifikationsmodell aus dem Datenspeicher zu laden. Das Zyklusphasenerkennungsmittel erhält Maschinendaten als Eingangsdaten, wobei die Maschinendaten auf den durch die Erfassungseinrichtung erfassten Zustandsdaten basieren. Dies kann bedeuten, dass die Zustandsdaten als Rohdaten zunächst verarbeitet und in Maschinendaten umgewandelt werden. Ebenfalls ist jedoch denkbar, dass die Maschinendaten den Zustandsdaten entsprechen (d.h. ohne zwischengeschaltete Verarbeitung bzw. Vorbereitung).

Das Zyklusphasenerkennungsmittel ist eingerichtet, Maschinendaten anhand des Klassifikationsmodells automatisch einer ersten Zyklusphase zuzuordnen, wobei letztere einem definierten Arbeitsprozess der Tiefbaumaschine entspricht. Der definierte Arbeitsprozess kann beispielsweise eine Bohrphase darstellen, die sich durch ein aktives Bohren eines Werkzeugs auszeichnet. Die der ersten Zyklusphase zugeordneten Maschinendaten können eine Untermenge der insgesamt aufgenommenen bzw. bereitgestellten Maschinendaten darstellen (d.h. nur ein Teil der Maschinendaten wird der ersten Zyklusphase zugeordnet). Die Zuordnung erfolgt also anhand des maschinell generierten Klassifikationsmodells automatisch. Die Regeln, nach denen die Zuordnung zur ersten Zyklusphase erfolgt, wurden gemäß des mathematischen Optimierungsverfahrens erstellt und hängen insbesondere von Aufbau und Typ der Tiefbaumaschine sowie vom Einsatzgebiet bzw. von der Einsatzart ab. Das Klassifikationsmodell lässt sich somit spezifisch auf die jeweilige Tiefbaumaschine und den Arbeitsprozess anpassen. Ferner können Daten von mehreren unterschiedlichen Maschinen für die Generierung des Klassifikationsmodells verwendet werden. Dies ermöglicht es, das Klassifikationsmodell für mehrere Maschinen und Einsatzgebiete bzw. Baustellen gleichzeitig anzuwenden.

Maschinendaten, die der ersten Zyklusphase nicht zugeordnet werden können, beispielsweise weil sie zu einer anderen Zyklusphase gehören (z.B. Entleeren oder Verrohren), können für die weitere Verarbeitung entweder nicht berücksichtigt oder aber einer zweiten (oder weiteren) Zyklusphase zugeordnet und anschließend verarbeitet werden. Die folgenden Erläuterungen für die der ersten Zyklusphase zugeordneten Maschinendaten können daher analog für Maschinendaten gelten, die weiteren Zyklusphasen zugeordnet werden.

Das Zyklenzuordnungsmittel erhält die der ersten Zyklusphase zugeordneten Maschinendaten als Eingangswerte und ist eingerichtet, diese Maschinendaten anhand einer festgelegten Zuordnungsregel automatisch einem Arbeitszyklus der Tiefbaumaschine zuzuordnen. Der Arbeitszyklus ist dabei durch Start- und Endwerte mindestens einer durch die Maschinendaten repräsentierten Messgröße definiert. Diese Start- und Endwerte können entweder fix bzw. festgelegt oder festlegbar sein (beispielsweise durch den Maschinenführer) oder können dauerhaft, systematisch und automatisch durch die automatische Erkennung ermittelt werden. Bei der Messgröße kann es sich um eine Einbringtiefe oder Bohrtiefe handeln, d.h. die Start- und Endwerte können eine Anfangstiefe und eine Endtiefe darstellen. Die Zuordnung der der ersten Zyklusphase zugewiesenen Maschinendaten zu einem Arbeitszyklus erfolgt also nicht anhand des Klassifikationsmodells oder eines anderen mit mathematischen Optimierungsmethoden maschinell erstellten Algorithmus, sondern anhand eines "klassischen" regelbasierten Algorithmus mit feststehenden bzw. insbesondere von vorneherein festgelegten Zuordnungsregeln.

Der Kerngedanke der vorliegenden Erfindung ist also, eine automatische Zyklenerkennung anhand einer Kombination aus einem "klassischen" regelbasierten Ansatz und einer Zuordnung mittels eines maschinell erstellten Klassifikationsalgorithmus zu implementieren. Die Zuordnung zur ersten Zyklusphase wird anhand des Klassifikationsmodells durchgeführt, da eine Festlegung von starren Regeln für eine derartige Zuordnung komplex und meist unzureichend ist - die Regeln für eine saubere Zuordnung unterscheiden sich von Maschine zu Maschine. Der regelbasierte Ansatz für die Zuweisung zu einem Arbeitszyklus wird verwendet, da eine Zuordnung anhand eines maschinell erstellten Klassifikationsalgorithmus nicht ohne Weiteres auf die gesamte Zyklenerkennung angewandt werden kann. Die erfindungsgemäße Kombination dieser beiden Ansätze ermöglicht hingegen eine zuverlässige automatische Erkennung und Zuordnung von Zyklusphasen und Arbeitszyklen. Dadurch lassen sich verschiedene Kenngrößen über einen Zyklus berechnen und mehrere Zyklen miteinander vergleichen. Beim Kellybohren bedeutet dies beispielsweise, den Beginn des ersten Bohrschritts bis zum Erreichen der Endtiefe bei Einzel- und Mehrfachpfählen und dabei die einzelnen Bohrbereiche (d.h. Phasen aktiven Bohrens) zu erkennen.

Der Datenspeicher kann sich in der Tiefbaumaschine befinden, sodass beispielsweise eine Steuerung der Tiefbaumaschine Zugriff auf den Datenspeicher hat. Ebenfalls ist denkbar, dass sich der Datenspeicher in einer externen Rechnereinheit befindet, welche vorzugsweise in einer direkten oder indirekten kommunikativen Verbindung, z.B.

kabelgebunden oder drahtlos, mit der Tiefbaumaschine steht. Ferner könnte der Datenspeicher eine Cloud darstellen oder Teil einer Cloudanwendung sein, sodass ein Rechner der Tiefbaumaschine und/oder eine externe Rechnereinheit drahtlosen oder kabelgebundenen Zugriff auf den Datenspeicher hat.

Das Zyklusphasenerkennungsmittel und/oder das Zyklenzuordnungsmittel können durch einen Softwarebaustein implementiert sein, der durch einen Prozessor, z.B. durch die Steuerung der Tiefbaumaschine, durch eine externe Rechnereinheit (z.B. in einem PC oder in einem mobilen Gerät wie Tablet, Smartphone etc.) oder in einer Cloud, ausgeführt wird.

In einer möglichen Ausführungsform ist vorgesehen, dass das Klassifikationsmodell anhand eines maschinellen Lernverfahrens, insbesondere eines überwachten maschinellen Lernverfahrens, generiert wurde. Die Trainingsdaten zur Erstellung des des Klassifikationsmodells bilden zuvor aufgenommene Maschinendaten der Tiefbaumaschine sowie bekannte Zyklusphasen, d.h. es werden historische Maschinendaten sowie bekannte Zyklusphasenbereiche der Daten zum Training des Algorithmus herangezogen. Als maschinelles Lernverfahren kann ein Gradient Boosting Modell zum Einsatz kommen, z.B. XGBoost. Dieser "Lernprozess" ist insbesondere kein aktiver Bestandteil der erfindungsgemäßen Zyklenerkennung, ist jedoch notwendig, um das Klassifikationsmodell aufzubauen.

In einer weiteren möglichen Ausführungsform ist vorgesehen, dass die Erfassungseinrichtung mindestens einen an der Tiefbaumaschine angebrachten Sensor umfasst, welcher eine Zustandsgröße der Tiefbaumaschine insbesondere kontinuierlich erfasst. Die kontinuierliche Erfassung kann einen Streaming-Betrieb (d.h. eine tatsächlich in Echtzeit erfolgende, kontinuierliche Erfassung und Weitergabe der Daten) oder eine Erfassung in regelmäßigen zeitlichen Abständen darstellen.

In einer weiteren möglichen Ausführungsform ist vorgesehen, dass die Erfassungseinrichtung einen oder mehrere der nachfolgend beschriebenen Sensoren umfasst.

Es kann ein Sensor zur Erfassung einer Seilgeschwindigkeit, beispielsweise einer Kellyseilgeschwindigkeit bei einer Kellybohranlage oder einer Seilgeschwindigkeit eines Seils, an dem eine Schlitzwandfräse aufgehängt ist, vorgesehen sein.

Alternativ oder zusätzlich kann ein Sensor zur Erfassung einer Seilkraft, beispielsweise einer Kellyseilkraft bei einer Kellybohranlage oder einer Seilkraft eines Seils, an dem eine Schlitzwandfräse aufgehängt ist, vorgesehen sein.

Alternativ oder zusätzlich kann ein Sensor zur Erfassung eines Antriebsdrucks, insbesondere Bohrantriebsdrucks (beispielsweise eines Antriebsdrucks eines Kellybohrantriebs oder eines Antriebs für Fräsräder einer Schlitzwandfräse), vorgesehen sein.

Alternativ oder zusätzlich kann ein Sensor zur Erfassung einer Antriebsdrehzahl, insbesondere Bohrantriebsdrehzahl (beispielsweise einer Drehzahl eines Kellybohrantriebs oder eines Antriebs für Fräsräder einer Schlitzwandfräse), vorgesehen sein.

Alternativ oder zusätzlich kann ein Sensor zur Erfassung eines Steuerungssignals, beispielsweise eines Ansteuerungssignals für einen Antrieb, insbesondere für einen Bohrantrieb (z.B. Ansteuerungssignal-Linksbohren oder -Rechtsbohren), vorgesehen sein.

Alternativ oder zusätzlich kann ein Sensor zur Erfassung einer Drehzahl und/oder eines Drucks eines Antriebs einer Erregerzelle einer Vibrationsramme (z.B. eines Hochkantrüttlers) vorgesehen sein.

Alternativ oder zusätzlich kann ein Sensor zur Erfassung einer Vorschubgeschwindigkeit und/oder Vorschubkraft eines Vorschubschlittens (beispielsweise eines an einem Mäkler verschiebbar gelagerten Vorschubschlittens einer Kellybohranlage, der den Bohrantrieb trägt) vorgesehen sein.

Alternativ oder zusätzlich kann ein Sensor zur Erfassung einer aktuellen Position der Tiefbaumaschine vorgesehen sein, beispielsweise ein GPS-Modul.

Alternativ oder zusätzlich kann ein Sensor zur Erfassung einer Orientierung der Tiefbaumaschine, beispielsweise eines Drehwinkels eines drehbar auf einem Unterwagen gelagerten Oberwagens der Tiefbaumaschine, vorgesehen sein.

Je nach Maschinentyp und Anwendung können mehrere der vorgenannten Sensoren in unterschiedlicher Anzahl und Kombination vorgesehen sein.

In einer weiteren möglichen Ausführungsform ist vorgesehen, dass der definierte Arbeitsprozess, je nach Anwendung, einen Bohrprozess, einen Verrohrungsprozess (d.h. insbesondere das Einbringen eines Stützrohres in den Boden), einen Entladeprozess (beispielsweise ein Entladen eines Bohrwerkzeugs), einen Einrüttel- bzw. Vibrationsprozess (beispielsweise ein Einrütteln eines Rammguts mittels eines Rüttlers oder einer Vibrationsramme), einen Rammprozess (beispielsweise das Einrammen eines Rammguts mittels eines hydraulischen Hammers) oder einen Fräsprozess (beispielsweise das Erstellen eines Bodenschlitzes mittels einer Schlitzwandfräse) betrifft.

In einer weiteren möglichen Ausführungsform ist vorgesehen, dass das Zyklusphasenerkennungsmittel eingerichtet ist, Maschinendaten anhand des Klassifikationsmodells mindestens zwei unterschiedlichen Zyklusphasen zuzuordnen. Diese unterschiedlichen Zyklusphasen entsprechen vorzugsweise unterschiedlichen definierten Arbeitsprozessen (z.B. Bohren und/oder Entladen und/oder Verrohren). Dadurch lassen sich mehr Informationen über den Arbeitsvorgang der Tiefbaumaschine zuverlässig und automatisiert sammeln und eine größere Bandbreite von Kenngrößen berechnen. Hierbei ist das Zyklenzuordnungsmittel eingerichtet, die einer bestimmten Zyklusphase zugeordneten Maschinendaten jeweils anhand einer festgelegten Zuordnungsregel einem Arbeitszyklus der Tiefbaumaschine zuzuordnen. Die unterschiedlichen Zyklusphasen können zu einem einzigen bzw. gemeinsamen Arbeitszyklus oder zu verschiedenen Arbeitszyklen gehören und entsprechend zugeordnet werden.

Ebenfalls ist es denkbar, dass das Zyklusphasenerkennungsmittel eingerichtet ist, Maschinendaten anhand des Klassifikationsmodells nur einer einzigen mit einem definierten Arbeitsprozess verknüpften Zyklusphase (erste Zyklusphase) zuzuordnen und alle Maschinendaten, die nicht dieser Zyklusphase zugeordnet werden können, einer anderen Klasse (z.B. "restlicher Arbeitsprozess") zuzuordnen, ohne dass hiermit ein definierter Arbeitsprozess verknüpft ist.

In einer weiteren möglichen Ausführungsform ist vorgesehen, dass die einen Arbeitszyklus definierenden Start- und Endwerte eine Bohrtiefe, eine Einbringtiefe, eine Position der Tiefbaumaschine und/oder eine Orientierung der Tiefbaumaschine betreffen. Insbesondere kann das Ende eines Arbeitszyklus durch Erreichen oder Überschreiten einer bestimmten Tiefe definiert sein.

In einer bevorzugten Ausführungsform kann vorgesehen sein, dass das Zyklenzuordnungsmittel eingerichtet ist, Maschinendaten einer Zyklusphase einem Arbeitszyklus zuzuordnen, wenn eine Differenz, insbesondere eine kleinste Differenz, zwischen einer GPS-Position der aktuell erkannten Zyklusphase und einer GPS-Position eines vorangegangenen Arbeitszyklus kleiner ist als ein festgelegter Grenzwert.

Alternativ oder zusätzlich kann vorgesehen sein, dass das Zyklenzuordnungsmittel eingerichtet ist, Maschinendaten einer Zyklusphase einem Arbeitszyklus zuzuordnen, wenn eine Differenz, insbesondere eine kleinste Differenz, zwischen einer Seillänge der aktuell erkannten Zyklusphase und einer Seillänge eines vorangegangenen Arbeitszyklus kleiner ist als ein festgelegter Grenzwert.

Alternativ oder zusätzlich kann vorgesehen sein, dass das Zyklenzuordnungsmittel eingerichtet ist, Maschinendaten einer Zyklusphase einem Arbeitszyklus zuzuordnen, wenn eine Differenz, insbesondere eine kleinste Differenz, zwischen einem Drehwerkswinkel der aktuell erkannten Zyklusphase und einem Drehwerkswinkel eines vorangegangenen Arbeitszyklus kleiner ist als ein festgelegter Grenzwert.

In einer weiteren möglichen Ausführungsform ist vorgesehen, dass das Zyklenzuordnungsmittel eingerichtet ist, zumindest einen Teil der einem bestimmten Arbeitszyklus zugeordneten Maschinendaten in einer zugehörigen Datenstruktur zu speichern. Bei der Datenstruktur kann es sich um einen strukturierten Datensatz handeln, in dem die Maschinendaten in strukturierter Weise abgelegt werden. Jedem erkannten Arbeitszyklus wird hierbei eine eigene Datenstruktur zugeordnet, sodass die zu einem bestimmten Arbeitszyklus gehörenden Maschinendaten im entsprechenden Datensatz gespeichert werden und zu einem späteren Zeitpunkt die Maschinendaten zu einem bestimmten Arbeitszyklus wieder abgerufen werden können.

Das Zyklenzuordnungsmittel ist vorzugsweise eingerichtet, die Datenstrukturen in einem Datenspeicher abzulegen und aus diesem auszulesen, und weist einen entsprechenden Zugriff auf den Datenspeicher auf. Der Datenspeicher kann lokal in der Tiefbaumaschine, in einer externen Rechnereinheit (z.B. in einem PC oder in einem mobilen Gerät wie Tablet, Smartphone etc.) oder in einer Cloud vorgesehen sein. Dabei kann es sich um den Datenspeicher handeln, in welchem auch das Klassifikationsmodell gespeichert ist, oder es kann sich um einen anderen Datenspeicher handeln.

In einer weiteren möglichen Ausführungsform ist vorgesehen, dass in den Datenstrukturen mindestens die erfassten Start- und Endwerte einer in den Maschinendaten enthaltenen Messgröße, insbesondere erfasste Start- und End-Bohrtiefen oder Start- und End-Einbringtiefen, gespeichert werden. Vorzugsweise werden zusätzlich die zu diesen Start- und Endwerten gehörenden Zeitstempel in den Datenstrukturen abgelegt. Aus jeder vollständigen Datenstruktur lässt sich im Nachhinein also insbesondere auslesen, welche Anfangs- und Endtiefen in dem betreffenden Arbeitszyklus erreicht wurden und zu welchen Zeitpunkten. Aus den Zeitstempeln lässt sich auch die zeitliche Dauer des Arbeitszyklus extrahieren.

Vorzugsweise werden neben diesen Start- und Endwerten weitere Maschinendaten in den Datenstrukturen gespeichert, beispielsweise Daten betreffend einen erfassten Kraftstoffverbrauch, eine erfasste Position und/oder eine erfasste Motorleistung der Tiefbaumaschine. Diese Daten können ggf. zusammen mit zugehörigen Zeitstempeln gespeichert werden.

Optional können neben den Start- und Endwerten auch alle Zwischenwerte mit abgespeichert werden, d.h. beispielsweise alle erfassten Bohr- oder Einbringtiefen zwischen einer Starttiefe und einer Endtiefe. Diese Werte können zusammen mit den zugehörigen Zeitstempeln abgelegt sein.

In einer weiteren möglichen Ausführungsform ist vorgesehen, dass das Zyklenzuordnungsmittel eingerichtet ist, bei Bereitstellung neuer Maschinendaten eine vorbestimmte Anzahl abgespeicherter Datenstrukturen aus einem Datenspeicher zu laden. Diese geladenen Datenstrukturen können ggf. weiter mit neuen Maschinendaten befüllt werden, beispielsweise bei der Erstellung von Mehrfachpfählen, bei welcher Zyklen abgebrochen und später wieder aufgenommen werden. Ebenfalls kann so ein Zyklus wieder aufgenommen und die betreffenden Maschinendaten in der zugehörigen Datenstruktur gespeichert werden, wenn der Arbeitstag des Maschinenführers beendet ist, bevor er den Zyklus abschließen konnte, und der Arbeitszyklus daraufhin abgebrochen wurde.

In dem Fall, dass die Maschinendaten einem bereits zumindest teilweise aufgezeichneten Arbeitszyklus zugeordnet werden, d.h. einem Arbeitszyklus, zu dem es bereits eine zumindest teilweise mit Maschinendaten gefüllte Datenstruktur gibt, die aus dem Datenspeicher geladen wurde, werden die neuen Maschinendaten in der "alten" bzw. geladenen Datenstruktur abgelegt und diese so ggf. komplettiert.

Können die Maschinendaten dagegen keinem der zuvor erkannten bzw. aufgezeichneten Arbeitszyklen zugeordnet werden, d.h. gehören die Maschinendaten zu keiner der aus dem Datenspeicher geladenen Datenstrukturen, so wird eine neue Datenstruktur für diesen Arbeitszyklus erzeugt und die besagten Maschinendaten in der neuen Datenstruktur abgelegt.

Das Erzeugen und/oder Laden und/oder Abspeichern der Datenstrukturen kann vom Zyklenzuordnungsmittel selbst oder von einem Datenorganisationsmittel durchgeführt werden, wobei letzteres mit dem Datenspeicher und dem Zyklenzuordnungsmittel kommuniziert und einen Softwarebaustein darstellen kann.

Die Erfindung betrifft weiterhin eine Tiefbaumaschine mit einer Erfassungseinrichtung des erfindungsgemäßen Systems, d.h. die Tiefbaumaschine weist insbesondere zumindest einen der oben genannten Sensoren zur Erfassung von Zustandsdaten auf, die dem Zyklusphasenerkennungsmittel zugeführt werden. Prinzipiell müssen das Zyklusphasenerkennungsmittel und/oder das Zyklenzuordnungsmittel nicht in der Tiefbaumaschine implementiert sein, sondern können auf einer externen Rechnereinheit oder Cloud ausgeführt werden, wobei der entsprechende Datenaustausch mit der Tiefbaumaschine vorzugsweise drahtlos erfolgt. Ebenfalls ist denkbar, dass das Zyklusphasenerkennungsmittel und/oder das Zyklenzuordnungsmittel auf einer Steuerung der Tiefbaumaschine, d.h. lokal ausgeführt werden. Der Datenspeicher für das Klassifikationsmodell und/oder der Datenspeicher, in dem die Datenstrukturen archiviert werden, können in der Tiefbaumaschine oder extern implementiert sein, wobei auch hier wieder bevorzugt ein drahtloser Austausch der entsprechenden Daten erfolgt. Hinsichtlich der Eigenschaften, Vorteile und möglichen Ausführungsformen des erfindungsgemäßen Systems bzw. der einzelnen Komponenten des Systems gelten die vorherigen Ausführungen analog, sodass auf eine wiederholende Beschreibung verzichtet wird.

Das hier vorgestellte Konzept mit den dynamisch beschreibbaren Datenstrukturen ermöglicht es, die Maschinendaten des aktuellen Arbeitszyklus mit den Maschinendaten der in den Datenstrukturen abgelegten, vorangegangenen Arbeitszyklen zu vergleichen und diesen ggf. zuzuordnen oder entsprechend eine neue Datenstruktur zu erzeugen. Können die Maschinendaten einem der "alten" bzw. geladenen Arbeitszyklen zugeordnet werden, dann können entweder die letzten Endwerte der geladenen Datenstruktur mit den neuen Maschinendaten überschrieben werden oder es können die neuen Maschinendaten der geladenen Datenstruktur angehängt werden.

Die abgelegten Maschinendaten / Arbeitszyklen können dabei prinzipiell zeitlich beliebig lange zurückreichen. Dadurch können auch "alte" Arbeitszyklen nochmal aktualisiert werden - welche Arbeitszyklen überschrieben werden können, wird insbesondere praktisch durch die Wahl der Zyklenanzahl beim Auslesen des Datenspeichers begrenzt. Die dynamisch beschreibbaren Datenstrukturen ermöglichen insbesondere eine zuverlässige, automatische Erkennung von Mehrfachpfählen.

Die Erfindung betrifft weiterhin ein Verfahren zur automatischen Erkennung von Arbeitszyklen einer Tiefbaumaschine mittels eines erfindungsgemäßen Systems. Das Verfahren umfasst die folgenden Schritte:

- Bereitstellen eines Klassifikationsmodells, welches durch ein mathematisches Optimierungsverfahren maschinell generiert wurde,
- Bereitstellen von Maschinendaten, welche auf durch eine Erfassungseinrichtung der Tiefbaumaschine erfassten Zustandsdaten betreffend einen Zustand der Tiefbaumaschine basieren,
- Zuordnen von Maschinendaten zu einer ersten Zyklusphase anhand des Klassifikationsmodells, wobei die erste Zyklusphase einem definierten Arbeitsprozess der Tiefbaumaschine entspricht,
- Zuordnen der Maschinendaten, die der ersten Zyklusphase zugeordnet wurden, zu einem Arbeitszyklus der Tiefbaumaschine anhand einer festgelegten Zuordnungsregel, wobei der Arbeitszyklus durch (insbesondere festgelegte oder festlegbare) Start- und Endwerte mindestens einer durch die Maschinendaten repräsentierten Messgröße definiert ist.

Auch hier gelten die Ausführungen zu den Vorteilen, Eigenschaften und möglichen Ausführungsformen des erfindungsgemäßen Systems analog für das erfindungsgemäße Verfahren. Auf eine wiederholende Beschreibung wird daher verzichtet.

In einer möglichen Ausführungsform ist vorgesehen, dass zumindest ein Teil der einem bestimmten Arbeitszyklus zugeordneten Maschinendaten in einer zugehörigen Datenstruktur abgelegt werden, wobei jedem erkannten Arbeitszyklus eine eigene Datenstruktur zugeordnet wird. Vorzugsweise enthält jede vollständig gefüllte Datenstruktur mindestens die erfassten Start- und Endwerte einer in den Maschinendaten enthaltenen Messgröße, insbesondere erfasste Start- und End-Bohrtiefen oder Start- und End-Einbringtiefen, sowie insbesondere zugehörige Zeitstempel.

In einer weiteren möglichen Ausführungsform ist vorgesehen, dass bei Bereitstellung neuer Maschinendaten eine vorbestimmte Anzahl abgespeicherter Datenstrukturen geladen wird. Hierbei können wiederum zwei Fälle unterschieden werden:

Können die neuen Maschinendaten einem zuvor bereits identifizierten Arbeitszyklus zugeordnet werden, d.h. einem Arbeitszyklus, der durch eine geladene und bereits zumindest teilweise mit Maschinendaten gefüllte Datenstruktur repräsentiert ist, so werden die neuen Maschinendaten in der entsprechenden geladenen Datenstruktur abgelegt. Können die neuen Maschinendaten dagegen keinem zuvor bereits identifizierten Arbeitszyklus zugeordnet werden, d.h. existiert zu dem aktuellen Arbeitszyklus keine geladene Datenstruktur, so wird eine neue Datenstruktur für diesen Arbeitszyklus erzeugt und die neuen Maschinendaten in der neuen Datenstruktur abgelegt.

Die Erfindung betrifft weiterhin ein Computerprogrammprodukt umfassend Befehle, die bei der Ausführung des Programms bewirken, dass die Schritte des erfindungsgemäßen Verfahrens ausgeführt werden. Die Schritte werden zumindest teilweise durch Komponenten der Tiefbaumaschine ausgeführt (insbesondere die Erfassung der Zustandsdaten durch eine Erfassungseinrichtung bzw. durch Sensoren). Insbesondere können alle Schritte des erfindungsgemäßen Verfahrens lokal in der Tiefbaumaschine ausführbar sein, beispielsweise wenn die entsprechenden Zyklusphasenerkennungsmittel und Zyklenzuordnungsmittel lokal in der Maschine ausgeführt werden, z.B. durch eine Steuerung.

Weitere Merkmale, Einzelheiten und Vorteile der Erfindung ergeben sich aus dem nachfolgend anhand der Figuren erläuterten Ausführungsbeispiel. Es zeigen:

Fig. 1: ein Beispiel eines zeitlichen Verlaufs der Bohrtiefe beim Kellybohren über einen Arbeitszyklus beim Erstellen eines Einfachpfahls;

Fig. 2: ein Beispiel eines zeitlichen Verlaufs der Bohrtiefe beim Kellybohren über mehrere Arbeitszyklen beim Erstellen eines Mehrfachpfahls; und

Fig. 3: eine schematische Darstellung des erfindungsgemäßen Systems gemäß einem bevorzugten Ausführungsbeispiel.

Die Figuren 1 und 2 zeigen beispielhafte zeitliche Verläufe der Bohrtiefe beim Kellybohren eines Einfachpfahls (Fig. 1) und eines Mehrfachpfahls (Fig. 2) und wurden bereits eingangs erläutert. Auf eine wiederholende Beschreibung wird an dieser Stelle daher verzichtet.

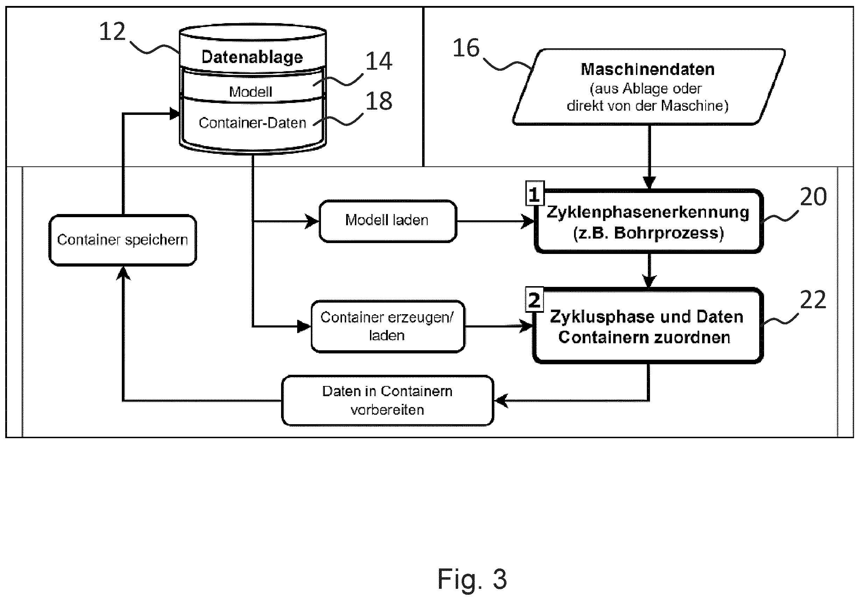

In der Figur 3 ist schematisch ein bevorzugtes Ausführungsbeispiel des erfindungsgemäßen Systems illustriert.

Der erfindungsgemäße Prozess der automatischen Zyklenerkennung umfasst zwei Hauptschritte: eine Zyklusphasenerkennung durch ein Zyklusphasenerkennungsmittel 20 und eine Zyklenzuordnung durch ein Zyklenzuordnungsmittel 22. Hier wird die Zyklenerkennung am Beispiel des Kellybohrens beschrieben, wobei die relevante Zyklusphase (= erste Zyklusphase) in diesem Ausführungsbeispiel der Bohrprozess 30 ist. Allerdings lässt sich das erfindungsgemäße Verfahren auch bei anderen Tiefgründungsarbeiten anwenden, beispielsweise beim Fräsen mittels einer Schlitzwandfräse oder beim Einrütteln von Rammgut mittels einer Vibrationsramme.

Im ersten Schritt erfolgt die Bohrprozesserkennung mit Hilfe eines Klassifikationsmodells 14. Das Modell 14 ist in einem Datenspeicher 12 abgelegt und wird vom Zyklusphasenerkennungsmittel 20 geladen. Das Zyklusphasenerkennungsmittel 20 erhält Maschinendaten 16 als Eingangswerte und ordnet diese anhand des Klassifikationsmodells 14 der ersten Zyklusphase bzw. dem Bohrprozess 30 zu. Die Maschinendaten 16 basieren auf durch Sensoren einer Erfassungseinrichtung der Tiefbaumaschine gemessenen Zustandsdaten (d.h. auf Roh-Sensordaten), die für die weitere Verarbeitung "vorbereitet" bzw. verarbeitet wurden.

Das Klassifikationsmodell 14 bildet in dem hier gezeigten Ausführungsbeispiel die vorbereiteten Sensordaten bzw. die Maschinendaten 16 auf die Klassen "Bohrprozess 30" oder "restlicher Prozess" ab. Mit anderen Worten ist das Klassifikationsmodell 14 in diesem Fall in der Lage zu prüfen, ob Messwerte der Maschinendaten dem Bohrprozess 30 zuzuordnen sind oder nicht. In der Figur 1 symbolisieren die Kreise die Datenpunkte der Klasse "Bohrprozess" 30, die übrigen Datenpunkte bzw. der übrige Signalverlauf gehört zur Klasse "restlicher Prozess" (mit dieser Klasse muss kein definierter Arbeitsprozess verknüpft sein, d.h. es muss nicht definiert sein, was die Maschine im Bereich "restlicher Prozess" macht, vgl. Fig. 1 ganz rechts). In einer alternativen Ausführungsform könnten neben einer Zuordnung zum Bohrprozess 30 zusätzlich Zuordnungen zu einem oder mehreren weiteren Zyklusphasen erfolgen, die jeweils zu einem definierten Arbeitsprozess gehören, beispielsweise zu den Zyklusphasen "Entladen 40" und/oder "Verrohren 50".

Die entsprechende Abbildungsregel des Modells 14 wird vorab anhand von historischen Maschinendaten 16 gelernt. Genauer gesagt wird anhand von vorbereiteten Sensordaten mit bekannten Bohrprozessbereichen 30 durch ein mathematisches Optimierungsverfahren die Abbildungsregel bestimmt (d.h. die Zeitbereiche der Bohrprozesse 30 müssen insbesondere vorher manuell festgelegt werden - Input und Output müssen bekannt sein; die Beziehung zwischen ihnen wird mathematisch ermittelt). Dieses Modell 14 wird nach Prinzipien des maschinellen Lernens erzeugt. Ein Machine-Learning-Algorithmus ermittelt hierbei automatisch bzw. selbstständig die entsprechenden Regeln für die Zuordnung der Maschinendaten 16 zu dem Bohrprozess 30 und erzeugt anhand der Trainingsdaten das Klassifikationsmodell 14. Hierfür kommt vorzugsweise ein Gradient-Boosting-Modell zum Einsatz, wobei andere Machine-Learning-Methoden ebenfalls denkbar sind.

Für die Bohrprozesserkennung durch das Zyklusphasenerkennungsmittel 20 werden im vorliegenden Ausführungsbeispiel folgende Messgrößen als Sensor- bzw. Maschinendaten 16 genutzt:

- Kelly-Seilgeschwindigkeit,
- Kelly-Seilkraft,
- Bohrantriebsdruck,
- Bohrantriebsdrehzahl,
- Ansteuerungssignal-links-Bohren,
- Ansteuerungssignal-rechts-Bohren.

Im zweiten Schritt werden die detektierten bzw. zugeordneten Bohrprozess-Datenpunkte 30 der Maschinendaten 16 durch das Zyklenzuordnungsmittel 22 anhand eines "klassischen", regelbasierten Algorithmus den jeweiligen Arbeitszyklen 60 zugeordnet. Hier wird ein aktueller Bohrprozess-Datenpunkt 30 nach festgelegten Regeln mit den Bohrprozess-Datenpunkten 30 vergangener Zyklen 60 verglichen, wobei vorzugsweise eine festgelegte Anzahl vergangener Zyklen 60 (z.B. die letzten zehn Zyklen 60, wobei selbstverständlich auch mehr oder weniger als zehn Zyklen herangezogen werden können) für den Vergleich herangezogen wird. Auf dieser Grundlage wird entschieden, ob ein neuer Zyklus 60 anfängt, ein bestehender Zyklus 60 noch aktiv ist oder ob ein bereits abgeschlossener Zyklus 60 wieder aufgenommen wird. Dadurch können beispielsweise auch Mehrfachfälle erkannt werden.

Die festgelegten Regeln nutzen in dem vorliegenden Ausführungsbeispiel folgende Messgrößen als Sensor- bzw. Maschinendaten 16:

- Kelly-Seillänge,
- Drehwerkswinkel,
- GPS-Positionen.

Die festgelegten Regeln basieren vorzugsweise auf dem Vergleich der aufgenommenen Messwerte der aktuellen Maschinendaten 16 mit bestimmten Grenzwerten und/oder mit gespeicherten Messwerten vergangener Zyklen und/oder Zyklusphasen. Hierbei muss beispielsweise eine Endtiefe nicht zwingend bekannt und/oder festgelegt sein. Stattdessen kann vorgesehen sein, dass eine Endtiefe erst durch die automatische Erkennung ermittelt wird.

Als Grenzwerte können beispielsweise maximal zulässige Abweichungen festgelegt werden (z.B. zwischen den Seillängen zweier aufeinanderfolgender Zyklusphasen-Datenpunkte).

Die Bohrprozess-Datenpunkte 30 werden in einem "Container" 18 (= strukturierter Datensatz bzw. Datenstruktur; im Folgenden werden diese Begriffe synonym verwendet) pro Zyklus 60 gesammelt. Dies erfolgt vorzugsweise durch das Zyklenzuordnungsmittel 22. In den Zyklen-Containern 18 werden mindestens die Start- und End-Zeitstempel eines Zyklus 60 sowie die zugehörigen Start- und End-Bohrtiefen aufgezeichnet. Zudem können weitere Daten wie z.B. der Kraftstoffverbrauch, GPS-Positionen oder die Motorleistung in den Zyklen-Containern 18 parallel mit aufgezeichnet und daraus Kenngrößen berechnet werden.

Wenn keine Maschinendaten 16 mehr vorhanden sind, schließt die Zyklenerkennung ab und die Zyklen-Container 18 werden im Datenspeicher 12 gespeichert. Sobald neue Maschinendaten 16 vorliegen (z.B. weil der Arbeitsprozess der Tiefbaumaschine fortgesetzt wird), wird eine festgelegte Anzahl aktiver Zyklen-Container 18 (z.B. die letzten zehn Container 18) wieder aus der Datenablage 12 geladen und ggf. weiter mit neuen Bohrprozess-Datenpunkten 30 befüllt. Dadurch können abgebrochene Zyklen 60 wieder aufgenommen werden - dies geschieht beispielsweise, wenn der Arbeitstag des Maschinenführers beendet ist, bevor er den Zyklus 60 abschließen konnte. Bei einem neuen Zyklus 60 wird ein neuer Container 18 erzeugt und mit den Bohrprozess-Datenpunkten 30 befüllt.

Im Prinzip kann das erfindungsgemäße Verfahren mit archivierten Sensor- bzw. Maschinendaten 16 oder mit Streaming-Daten, direkt auf der Tiefbaumaschine, lokal auf einem PC oder in einer Cloud durchgeführt werden. Dies unter der Voraussetzung, dass eine entsprechende Software- und Hardwareinfrastruktur vorhanden ist.

Im Folgenden soll nun ein konkretes Beispiel der erfindungsgemäßen Zyklenzuordnung beschrieben werden.

Bei der regelbasierten Zuordnung der Daten der erkannten Zyklusphase zu den jeweiligen Zyklen (Container / Datenstruktur 18) können beispielsweise die Signale "Seillänge" (Kellyseillänge beim Kellybohren) und/oder "Drehwerkswinkel" und/oder "GPS-Positionen" der Maschine genutzt werden. Je nach Vorhandensein entsprechender Sensorik mit hinreichender Genauigkeit, wird für die Zyklusphasenzuordnung mindestens eines der erwähnten Signale genutzt (vorzugsweise GPS-Positionen der Tiefbaumaschine und/oder eines Werkzeugs der Tiefbaumaschine).

Der regelbasierte Ansatz kann beispielsweise nach den folgenden Szenarien ablaufen:

1. Die Datenstruktur 18 der Zyklen existiert noch nicht bzw. ist leer (bisher wurden noch keine Zyklusphasen zugeordnet). Maschinendaten 16 der ersten erkannten Zyklusphase (z.B. Bohren, Fräsen etc.) werden in einer neu erzeugten Datenstruktur 18 gespeichert und nummeriert, beispielsweise als "Zyklus 1". Hierbei ist noch keine Regelanwendung notwendig.

2. Datenstrukturen 18 sind in einem Datenspeicher 12 abgelegt und enthalten Maschinendaten 16 (vergangener bzw. historischer) Zyklusphasen und Zyklusinformationen.

2.1 Ein Teil der Datenstrukturen 18 wird geladen (z.B. Datenstrukturen 18 mit den letzten zehn Zyklen).

2.2 Maschinendaten 16 der ersten bzw. nächsten erkannten Zyklusphase werden einem der (z.B. zehn) Zyklen zugeordnet, wenn: $\left(\min_i |gps_j - gps_i|\right) < \varepsilon_g$ und/oder $\left(\min_i |s_j - s_i|\right) < \varepsilon_s$ und/oder

$\left(\min_i |w_j - w_i|\right) < \varepsilon_w$

mit:

- $gps_j$ als GPS-Positionen der aktuell erkannten Zyklusphase,
- $gps_i$ als GPS-Positionen eines der (vorangegangenen bzw. historischen) Zyklen $i$ in der Datenstruktur,
- $\varepsilon_g$ als festgelegtem maximal zulässigem Abstand der GPS-Positionen,
- $s_j$ als Seillänge der aktuell erkannten Zyklusphase,
- $s_i$ als Seillänge eines der Zyklen $i$ in der Datenstruktur 18,
- $\varepsilon_s$ als festgelegter maximal zulässiger Differenz der Seillängen,
- $w_j$ als Drehwerkswinkel der aktuell erkannten Zyklusphase,
- $w_i$ als Drehwerkswinkel eines der Zyklen i in der Datenstruktur 18,
- $\varepsilon_w$ als festgelegter maximal zulässiger Differenz der Drehwerkswinkel.

Erweiterungen oder Alternativen zu diesen Zuordnungsregeln sind denkbar.
Falls beispielsweise nur die GPS-Positionen zur Verfügung stehen, kann die regelbasierte Zuordnung folgendermaßen ablaufen:

- "überprüfe welche GPS-Positionen in der Datenstruktur $gps_i$ den GPS-Positionen der aktuellen Zyklusphase $gps_j$ am nächsten sind
- UND ist die Abweichung ihrer GPS-Positionen kleiner als ein festgelegter Abstand $\varepsilon_g$,
- DANN ordne die Maschinendaten 16 der Zyklusphase dem entsprechenden Zyklus zu".

Entsprechende Regeln können natürlich auch für Seillängen und/oder Drehwerkswinkel etc. vorgesehen sein.
Bei der Zuordnung werden in der Datenstruktur 18 entweder die zuletzt gespeicherten Daten mit den neuen Daten überschrieben (überschriebene Endwerte), oder die neuen Daten angehängt (Endwerte als letzter Eintrag in der Datenstruktur 18). Welche Variante gewählt wird, hängt von den Anforderungen und Ressourcen (Performance, Speicherplatz) ab.
2.3 Wird eine der Bedingungen nicht erfüllt, wird ein neuer Zyklus (z.B. ein elfter Zyklus) bzw. eine neue Datenstruktur 18 erzeugt und dieser die Maschinendaten 16 der aktuell erkannten Zyklusphase zugeordnet.
2.4 Wurden alle vorhanden Maschinendaten durchlaufen, werden die befüllten Datenstrukturen 18 in einem Datenspeicher 12 abgelegt.
Der folgende Pseudo-Code stellt die Grundidee des regelbasierten Vergleichs anhand eines konkreten Beispiels dar. Dieser kann im Detail abweichen - weitere, komplexere Bedingungen, Daten oder performance-optimierter Aufbau etc. sind denkbar.
Für $z_j$:

$$\Delta m = infinite$$

$$mz_{tmp} = infinite$$

$$i = 0$$

FOR $mz_i$ in $ds$ DO

    $i = i + 1$

    IF $|m_j - mz_i| < \Delta m$

        $\Delta m = |m_j - mz_i|$

        $mz_{tmp} = m_i$

IF $\Delta m < \varepsilon$

    $ds[i] \leftarrow z_j$          # entweder anhängen oder überschreiben

ELSE

    IF $i == 0$

        $ds[1] \leftarrow z_j$       # erste neue Datenstruktur 18 erzeugen

    ELSE

        $ds[i + 1] \leftarrow z_j$    # neue / nächste Datenstruktur 18 anhängen

mit:

- $\varepsilon$: festgelegte, maximal zulässige Differenz der Maschinendaten 16 (zwischen aktuellen Maschinendaten 16 und Maschinendaten 16 in den Datenstrukturen 18)
- $z_j$: durch das Klassifikationsmodell aktuell erkannte Zyklusphase (z.B. "aktives Bohren")
- $ds$: Datenstrukturen 18 mit Maschinendaten 16 und Zyklusinformationen
- $m_j$: als $z_j$ zugehörige Maschinendaten 16 die für die Zyklusphasenzuordnung verwendet werden
- $mz_i$: als einem Zyklus $i$ (Datenstruktur 18) zugehörige Maschinendaten 16, die für die Zyklusphasenzuordnung verwendet werden - Vergleich mit $m_j$
- $\Delta m$: kleinste, absolute Differenz zwischen $m_j$ und $mz_i$
- $mz_{tmp}$: zwischengespeicherter Zustand der Maschinendaten 16 eines Zyklus i (Datenstruktur 18) mit der geringsten Abweichung zu $m_j$
- $i, j$: Laufindizes $i, j$, wobei i einer Zyklusnummerierung entspricht.

$d_{i,j}$ enthalten mindestens Daten der Kellyseillänge für die Zyklusphasenzuordnung. Zusätzlich können GPS-Positionen und/oder Drehwerkswinkel enthalten sein und genutzt werden - bei Vorhandensein der Signale und bei hinreichender Signalgenauigkeit. Die Aufnahme weiterer Maschinendaten / Signale ist selbstverständlich nicht ausgeschlossen.

**Bezugszeichenliste:**

| | |
|---|---|
| 12 | Datenspeicher |
| 14 | Klassifikationsmodell |
| 16 | Maschinendaten |
| 18 | Datenstruktur(en) |
| 20 | Zyklusphasenerkennungsmittel |
| 22 | Zyklenzuordnungsmittel |
| 30 | Erste Zyklusphase ("aktives Bohren") |
| 40 | Zyklusphase "Entladen" |

50    Zyklusphase "Verrohren"
60    Zyklus
61    Erster Bohrschritt
71    Erster Zyklus
72    Zweiter Zyklus

**Patentansprüche**

1.   System zur automatischen Erkennung von Arbeitszyklen einer Tiefbaumaschine umfassend:

- einen Datenspeicher (12), auf dem ein durch ein mathematisches Optimierungsverfahren maschinell generiertes Klassifikationsmodell (14) hinterlegt ist,
- eine Erfassungseinrichtung, mittels welcher Zustandsdaten betreffend einen Zustand der Tiefbaumaschine erfassbar sind,
- ein Zyklusphasenerkennungsmittel (20), welches Zugriff auf den Datenspeicher (12) hat, welches auf den erfassten Zustandsdaten basierende Maschinendaten (16) als Eingangsdaten erhält und welches eingerichtet ist, Maschinendaten (16) anhand des Klassifikationsmodells (14) automatisch einer ersten Zyklusphase (30) zuzuordnen, wobei die erste Zyklusphase (30) einem definierten Arbeitsprozess der Tiefbaumaschine entspricht,
- ein Zyklenzuordnungsmittel (22), welches die der ersten Zyklusphase (30) zugeordneten Maschinendaten (16) als Eingangsdaten erhält und welches eingerichtet ist, diese Maschinendaten (16) anhand einer festgelegten Zuordnungsregel automatisch einem Arbeitszyklus (60) der Tiefbaumaschine zuzuordnen, wobei der Arbeitszyklus (60) durch Start- und Endwerte mindestens einer durch die Maschinendaten (16) repräsentierten Messgröße definiert ist.

2.   System nach Anspruch 1, wobei das Klassifikationsmodell (14) anhand eines insbesondere überwachten maschinellen Lernverfahrens auf Grundlage von Maschinendaten (16) der Tiefbaumaschine und bekannten Zyklusphasen (30) generiert wurde.

3.   System nach Anspruch 1 oder 2, wobei die Erfassungseinrichtung mindestens einen an der Tiefbaumaschine angebrachten Sensor umfasst, welcher eine Zustandsgröße der Tiefbaumaschine insbesondere kontinuierlich erfasst.

4.   System nach einem der vorhergehenden Ansprüche, wobei die Erfassungseinrichtung einen oder mehrere der folgenden Sensoren umfasst:

- einen Sensor zur Erfassung einer Seilgeschwindigkeit, insbesondere Kellyseilgeschwindigkeit,
- einen Sensor zur Erfassung einer Seilkraft, insbesondere Kellyseilkraft,
- einen Sensor zur Erfassung eines Antriebsdrucks, insbesondere Bohrantriebsdrucks,
- einen Sensor zur Erfassung einer Antriebsdrehzahl, insbesondere Bohrantriebsdrehzahl,
- einen Sensor zur Erfassung eines Steuerungssignals, insbesondere eines Ansteuerungssignals für einen Antrieb, insbesondere eines Ansteuerungssignals für einen Bohrantrieb.

5.   System nach einem der vorhergehenden Ansprüche, wobei der definierte Arbeitsprozess einen Bohrprozess, einen Verrohrungsprozess, einen Entladeprozess, einen Einrüttelprozess, einen Rammprozess oder einen Fräsprozess betrifft.

6.   System nach einem der vorhergehenden Ansprüche, wobei das Zyklusphasenerkennungsmittel (20) eingerichtet ist, Maschinendaten (16) anhand des Klassifikationsmodells mindestens zwei unterschiedlichen Zyklusphasen (30, 40, 50) zuzuordnen, wobei das Zyklenzuordnungsmittel (22) eingerichtet ist, die einer bestimmten Zyklusphase (30 ,40, 50) zugeordneten Maschinendaten (16) jeweils anhand einer festgelegten Zuordnungsregel einem Arbeitszyklus (60) der Tiefbaumaschine zuzuordnen.

7.   System nach einem der vorhergehenden Ansprüche, wobei die einen Arbeitszyklus (60) definierenden Start- und Endwerte eine Bohrtiefe, eine Einbringtiefe, eine Position der Tiefbaumaschine und/oder eine Orientierung der Tiefbaumaschine betreffen.

8.   System nach einem der vorhergehenden Ansprüche, wobei das Zyklenzuordnungsmittel (22) eingerichtet ist, zumindest einen Teil der einem bestimmten Arbeitszyklus (60) zugeordneten Maschinendaten (16) in einer zugehörigen Datenstruktur (18) zu speichern, wobei jedem erkannten Arbeitszyklus (60) eine eigene Datenstruktur (18) zugeordnet ist, wobei das Zyklenzuordnungsmittel (22) vorzugsweise ferner eingerichtet ist, die Datenstrukturen (18) in einem Datenspeicher (12) abzulegen und aus diesem auszulesen.

9. System nach Anspruch 8, wobei in den Datenstrukturen (18) erfasste Start- und Endwerte einer in den Maschinendaten (16) enthaltenen Messgröße, insbesondere erfasste Start- und End-Bohrtiefen oder Start- und End-Einbringtiefen, sowie insbesondere zugehörige Zeitstempel abgelegt werden, wobei vorzugsweise weitere erfasste Maschinendaten (16) in den Datenstrukturen (18) abgelegt werden, insbesondere Daten betreffend einen erfassten Kraftstoffverbrauch der Tiefbaumaschine, eine erfassten Position der Tiefbaumaschine und/oder eine erfasste Motorleistung der Tiefbaumaschine.

10. System nach Anspruch 8 oder 9, wobei das Zyklenzuordnungsmittel (22) eingerichtet ist, bei Bereitstellung neuer Maschinendaten (16) eine vorbestimmte Anzahl abgespeicherter Datenstrukturen (18) aus einem Datenspeicher (12) zu laden, wobei das Zyklenzuordnungsmittel (22) ferner eingerichtet ist:

- in dem Fall, dass Maschinendaten (16) einem Arbeitszyklus (60) zugeordnet werden, der durch eine geladene, bereits teilweise mit Maschinendaten (16) gefüllte Datenstruktur (18) repräsentiert ist, die besagten Maschinendaten (16) in der geladenen Datenstruktur (18) abzulegen und
- in dem Fall, dass Maschinendaten (16) einem neuen Arbeitszyklus (60) zugeordnet werden, der durch keine der geladenen Datenstrukturen (18) repräsentiert ist, eine neue Datenstruktur (18) für diesen Arbeitszyklus (60) zu erzeugen und die besagten Maschinendaten (16) in der neuen Datenstruktur (18) abzulegen.

11. Tiefbaumaschine mit einem System nach einem der Ansprüche 1-10.

12. Verfahren zur automatischen Erkennung von Arbeitszyklen einer Tiefbaumaschine mittels eines Systems nach einem der Ansprüche 1 bis 10 mit den Schritten:

1) Bereitstellen eines Klassifikationsmodells (14), welches durch ein mathematisches Optimierungsverfahren maschinell generiert wurde,
2) Bereitstellen von Maschinendaten (16), welche auf durch eine Erfassungseinrichtung der Tiefbaumaschine erfassten Zustandsdaten betreffend einen Zustand der Tiefbaumaschine basieren,
3) Zuordnen von Maschinendaten (16) zu einer ersten Zyklusphase (30) anhand des Klassifikationsmodells (14), wobei die erste Zyklusphase (30) einem definierten Arbeitsprozess der Tiefbaumaschine entspricht,
4) Zuordnen der Maschinendaten (16), die der ersten Zyklusphase (30) zugeordnet wurden, zu einem Arbeitszyklus (60) der Tiefbaumaschine anhand einer festgelegten Zuordnungsregel, wobei der Arbeitszyklus (60) durch Start- und Endwerte mindestens einer durch die Maschinendaten (16) repräsentierten Messgröße definiert ist.

13. Verfahren nach Anspruch 12, wobei zumindest ein Teil der einem bestimmten Arbeitszyklus (60) zugeordneten Maschinendaten (16) in einer zugehörigen Datenstruktur (18) abgelegt werden, wobei jedem erkannten Arbeitszyklus (60) eine eigene Datenstruktur (18) zugeordnet wird, wobei vorzugsweise jede vollständig gefüllte Datenstruktur (18) mindestens die erfassten Start- und Endwerte einer in den Maschinendaten (16) enthaltenen Messgröße, insbesondere erfasste Start- und End-Bohrtiefen oder Start- und End-Einbringtiefen, sowie insbesondere zugehörige Zeitstempel enthält.

14. Verfahren nach Anspruch 12 oder 13, wobei bei Bereitstellung neuer Maschinendaten (16) eine vorbestimmte Anzahl abgespeicherter Datenstrukturen (18) geladen wird, wobei:

- in dem Fall, dass Maschinendaten (16) einem Arbeitszyklus (60) zugeordnet werden, der durch eine geladene, bereits zumindest teilweise mit Maschinendaten (16) gefüllte Datenstruktur (18) repräsentiert ist, die besagten Maschinendaten (16) in der geladenen Datenstruktur (18) abgelegt werden und
- in dem Fall, dass Maschinendaten (16) einem neuen Arbeitszyklus (60) zugeordnet werden, der durch keine der geladenen Datenstrukturen (18) repräsentiert ist, eine neue Datenstruktur (18) für diesen Arbeitszyklus (60) erzeugt wird und die besagten Maschinendaten (16) in der neuen Datenstruktur (18) abgelegt werden.

15. Computerprogrammprodukt umfassend Befehle, die bei der Ausführung des Programms bewirken, dass die Schritte des Verfahrens nach einem der Ansprüche 12 bis 14 durch die Tiefbaumaschine nach Anspruch 11 ausgeführt werden.

**Claims**

1. System for automatic recognition of work cycles of a civil engineering machine, comprising:

   - a data storage (12) on which a classification model (14), generated automatically by a mathematical optimization method, is stored,
   - a detection device by means of which status data concerning a status of the civil engineering machine can be detected,
   - a cycle phase recognition device (20) which has access to the data storage (12), which receives machine data (16) based on the detected status data as input data and which is configured to automatically allocate machine data (16) to a first cycle phase (30) based on the classification model (14), wherein the first cycle phase (30) corresponds to a defined work process of the civil engineering machine,
   - a cycle allocation device (22) which receives the machine data (16) allocated to the first cycle phase (30) as input data and which is configured to automatically allocate these machine data (16) to a work cycle (60) of the civil engineering machine based on a defined allocation rule, wherein the work cycle (60) is defined by start and end values of at least one measured variable represented by the machine data (16).

2. System according to claim 1, wherein the classification model (14) was generated by means of a machine learning method, in particular a supervised machine learning method, based on machine data (16) of the civil engineering machine and known cycle phases (30).

3. System according to claim 1 or 2, wherein the detection device comprises at least one sensor attached to the civil engineering machine, which detects a state variable of the civil engineering machine, in particular continuously.

4. System according to any one of the preceding claims, wherein the detection device comprises one or more of the following sensors:

   - a sensor for detecting a rope speed, in particular Kelly rope speed,
   - a sensor for detecting a rope force, in particular Kelly rope force,
   - a sensor for detecting a drive pressure, in particular drilling drive pressure,
   - a sensor for detecting a drive speed, in particular drilling drive speed,
   - a sensor for detecting a control signal, in particular a drive control signal, in particular a drive control signal for a drilling drive.

5. System according to any one of the preceding claims, wherein the defined work process relates to a drilling process, a casing process, an unloading process, a vibrating process, a pile driving process or a milling process.

6. System according to any one of the preceding claims, wherein the cycle phase recognition device (20) is configured to allocate machine data (16) to at least two different cycle phases (30, 40, 50) based on the classification model, wherein the cycle allocation device (22) is configured to allocate the machine data (16) allocated to a specific cycle phase (30, 40, 50) to a work cycle (60) of the civil engineering machine in each case based on a predetermined allocation rule.

7. System according to any one of the preceding claims, wherein the start and end values defining a work cycle (60) relate to a drilling depth, a placement depth, a position of the civil engineering machine, and/or an orientation of the civil engineering machine.

8. System according to any one of the preceding claims, wherein the cycle allocation device (22) is configured to store at least a part of the machine data (16) allocated to a particular work cycle (60) in an associated data structure (18), wherein a separate data structure (18) is allocated to each detected work cycle (60), wherein the cycle allocation device (22) is preferably further configured to store the data structures (18) in a data storage (12) and to read them from there.

9. System according to claim 8, wherein detected start and end values of a measured variable contained in the machine data (16), in particular detected start and end drilling depths or start and end insertion depths, as well as in particular associated time stamps are stored in the data structures (18), wherein preferably further detected machine data (16) are stored in the data structures (18), in particular data relating to a detected fuel consumption of the civil engineering machine, a detected position of the civil engineering machine and/or a detected engine power of the civil engineering machine.

10. System according to claim 8 or 9, wherein the cycle allocation device (22) is configured to load a predetermined number of stored data structures (18) from a data storage (12) when new machine data (16) is provided, wherein the cycle allocation device (22) is further configured:

- in the case where machine data (16) are allocated to a work cycle (60) represented by a loaded data structure (18) already partially filled with machine data (16), to store said machine data (16) in the loaded data structure (18), and
- in the case that machine data (16) are allocated to a new work cycle (60) which is not represented by any of the loaded data structures (18), to generate a new data structure (18) for this work cycle (60) and to store said machine data (16) in the new data structure (18).

11. Civil engineering machine according to any one of the claims 1-10.

12. Method for automatically recognizing work cycles of a civil engineering machine by means of a system according to any one of claims 1 to 10, comprising the steps of:

1) Providing a classification model (14) which has been machine-generated by a mathematical optimization procedure,
2) Providing machine data (16) based on condition data regarding a state of the civil engineering machine detected by a detection device of the civil engineering machine,
3) Allocating machine data (16) to a first cycle phase (30) based on the classification model (14), wherein the first cycle phase (30) corresponds to a defined work process of the civil engineering machine,
4) Allocating the machine data (16), which have been allocated to the first cycle phase (30), to a work cycle (60) of the civil engineering machine based on a defined allocation rule, wherein the work cycle (60) is defined by start and end values of at least one measured variable represented by the machine data (16).

13. Method according to claim 12, wherein at least part of the machine data (16) allocated to a specific work cycle (60) are stored in an associated data structure (18), wherein each recognized work cycle (60) is allocated its own data structure (18), wherein preferably each completely filled data structure (18) contains at least the detected start and end values of a measured variable contained in the machine data (16), in particular detected start and end drilling depths or start and end insertion depths, and in particular associated time stamps.

14. Method according to claim 12 or 13, wherein a predetermined number of stored data structures (18) are loaded when new machine data (16) is provided, wherein:

- in the case where machine data (16) are allocated to a work cycle (60) represented by a loaded data structure (18) already at least partially filled with machine data (16), said machine data (16) are stored in the loaded data structure (18), and
- in the case that machine data (16) are allocated to a new work cycle (60) which is not represented by any of the loaded data structures (18), a new data structure (18) is generated for this work cycle (60) and said machine data (16) are stored in the new data structure (18).

15. Computer program product, comprising instructions which, when the program is executed, cause the steps of the method according to any one of claims 12 to 14 to be carried out by the civil engineering machine of claim 11.

**Revendications**

1. Système de reconnaissance automatique de cycles de travail d'une machine de génie civil, comprenant :

- une mémoire de données (12), dans laquelle est enregistré un modèle de classification (14) généré par machine par un procédé d'optimisation mathématique,
- un dispositif d'acquisition, au moyen duquel des données d'état concernant un état de la machine de génie civil peuvent être acquises,

- un moyen de reconnaissance de phase de cycle (20), qui a accès à la mémoire de données (12), qui reçoit en tant que données d'entrée des données de machine (16) basées sur les données d'état détectées et qui est adapté pour affecter automatiquement des données de machine (16) à une première phase de cycle (30) à l'aide du modèle de classification (14), la première phase de cycle (30) correspondant à un processus de travail défini de la machine de génie civil,
- un moyen d'affectation de cycle (22) qui reçoit les données de machine (16) affectées à la première phase de cycle (30) en tant que données d'entrée et qui est adapté pour affecter automatiquement ces données de machine (16) à un cycle de travail (60) de la machine de génie civil à l'aide d'une règle d'affectation établie, le cycle de travail (60) étant défini par des valeurs de début et de fin d'au moins une grandeur de mesure représentée par les données de machine (16).

2. Système selon la revendication 1, dans lequel le modèle de classification (14) a été généré à l'aide d'un procédé d'apprentissage par machine, notamment supervisé, sur la base de données de machine (16) de la machine de génie civil et de phases de cycle (30) connues.

3. Système selon la revendication 1 ou 2, dans lequel le dispositif d'acquisition comprend au moins un capteur monté sur la machine de génie civil, qui acquiert une grandeur d'état de la machine de génie civil, notamment en continu.

4. Système selon l'une quelconque des revendications précédentes, dans lequel le dispositif d'acquisition comprend un ou plusieurs des capteurs suivants :

- un capteur pour l'acquisition d'une vitesse de câble, notamment d'une vitesse de câble Kelly,
- un capteur pour l'acquisition d'une force de câble, notamment d'une force de câble Kelly,
- un capteur pour l'acquisition d'une pression d'entraînement, notamment d'une pression d'entraînement de forage,
- un capteur pour l'acquisition d'une vitesse de rotation d'entraînement, notamment d'une vitesse de rotation d'entraînement de forage,
- un capteur pour l'acquisition d'un signal de commande, notamment d'un signal de commande pour un entraînement, notamment d'un signal de commande pour un entraînement de forage.

5. Système selon l'une quelconque des revendications précédentes, dans lequel le processus de travail défini concerne un processus de forage, un processus de tubage, un processus de déchargement, un processus de vibrofonçage, un processus de battage ou un processus de fraisage.

6. Système selon l'une quelconque des revendications précédentes, dans lequel le moyen de reconnaissance de phase de cycle (20) est adapté pour affecter des données de machine (16) à au moins deux phases de cycle différentes (30, 40, 50) à l'aide du modèle de classification, dans lequel le moyen d'affectation de cycle (22) est adapté pour affecter les données de machine (16) affectées à une phase de cycle déterminée (30, 40, 50) à un cycle de travail (60) de la machine de génie civil à l'aide d'une règle d'affectation établie.

7. Système selon l'une quelconque des revendications précédentes, dans lequel les valeurs de début et de fin définissant un cycle de travail (60) concernent une profondeur de forage, une profondeur d'insertion, une position de la machine de génie civil et/ou une orientation de la machine de génie civil.

8. Système selon l'une quelconque des revendications précédentes, dans lequel le moyen d'affectation de cycle (22) est adapté pour mémoriser au moins une partie des données de machine (16) affectées à un cycle de travail (60) déterminé dans une structure de données (18) associée, une structure de données (18) propre étant affectée à chaque cycle de travail (60) reconnu, le moyen d'affectation de cycle (22) étant de préférence en outre adapté pour stocker les structures de données (18) dans une mémoire de données (12) et pour les lire à partir de celle-ci.

9. Système selon la revendication 8, dans lequel des valeurs de début et de fin acquises d'une grandeur de mesure contenue dans les données de machine (16), notamment des profondeurs de forage de début et de fin ou des profondeurs d'insertion de début et de fin acquises, ainsi que notamment des horodatages associés, sont stockés dans les structures de données (18), d'autres données de machine (16) acquises étant de préférence stockées dans les structures de données (18), notamment des données concernant une consommation de carburant acquise de la machine de génie civil, une position acquise de la machine de génie civil et/ou une puissance moteur acquise de la machine de génie civil.

**10.** Système selon la revendication 8 ou 9, dans lequel le moyen d'affectation de cycle (22) est adapté pour charger un nombre prédéterminé de structures de données mémorisées (18) à partir d'une mémoire de données (12) lorsque de nouvelles données de machine (16) sont fournies, dans lequel le moyen d'affectation de cycle (22) est en outre adapté pour :

- dans le cas où des données de machine (16) sont affectées à un cycle de travail (60) représenté par une structure de données chargée (18) déjà partiellement remplie de données de machine (16), stocker lesdites données de machine (16) dans la structure de données chargée (18) et,
- dans le cas où des données de machine (16) sont affectées à un nouveau cycle de travail (60) qui n'est représenté par aucune des structures de données chargées (18), créer une nouvelle structure de données (18) pour ce cycle de travail (60) et stocker lesdites données de machine (16) dans la nouvelle structure de données (18).

**11.** Machine de génie civil avec un système selon l'une quelconque des revendications 1 à 10.

**12.** Procédé de reconnaissance automatique de cycles de travail d'une machine de génie civil au moyen d'un système selon l'une quelconque des revendications 1 à 10, avec les étapes suivantes :

1) la fourniture d'un modèle de classification (14), qui a été généré par machine par un procédé d'optimisation mathématique,
2) la fourniture de données de machine (16) basées sur des données d'état concernant un état de la machine de génie civil acquises par un dispositif d'acquisition de la machine de génie civil,
3) l'affectation de données de machine (16) à une première phase de cycle (30) à l'aide du modèle de classification (14), la première phase de cycle (30) correspondant à un processus de travail défini de la machine de génie civil,
4) l'affectation des données de machine (16) affectées à la première phase de cycle (30) à un cycle de travail (60) de la machine de génie civil à l'aide d'une règle d'affectation établie, le cycle de travail (60) étant défini par des valeurs de début et de fin d'au moins une grandeur de mesure représentée par les données de machine (16).

**13.** Procédé selon la revendication 12, dans lequel au moins une partie des données de machine (16) affectées à un cycle de travail (60) déterminé sont stockées dans une structure de données (18) associée, une structure de données (18) propre étant affectée à chaque cycle de travail (60) reconnu, chaque structure de données (18) entièrement remplie contenant de préférence au moins les valeurs de début et de fin acquises d'une grandeur de mesure contenue dans les données de machine (16), notamment des profondeurs de forage de début et de fin ou des profondeurs d'insertion de début et de fin acquises, ainsi que notamment des horodatages associés.

**14.** Procédé selon la revendication 12 ou 13, dans lequel, lors de la fourniture de nouvelles données de machine (16), un nombre prédéterminé de structures de données (18) mémorisées est chargé, dans lequel :

- dans le cas où des données de machine (16) sont affectées à un cycle de travail (60) représenté par une structure de données (18) chargée, déjà au moins partiellement remplie de données de machine (16), lesdites données de machine (16) sont stockées dans la structure de données (18) chargée et
- dans le cas où les données de machine (16) sont affectées à un nouveau cycle de travail (60) qui n'est représenté par aucune des structures de données chargées (18), une nouvelle structure de données (18) est créée pour ce cycle de travail (60) et lesdites données de machine (16) sont stockées dans la nouvelle structure de données (18).

**15.** Produit de programme informatique comprenant des instructions qui, lors de l'exécution du programme, provoquent l'exécution des étapes du procédé selon l'une quelconque des revendications 12 à 14 par la machine de génie civil selon la revendication 11.

Fig. 1

EP 4 321 726 B1

Fig. 2

Fig. 3

EP 4 321 726 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3978724 A1